# EUROPÄISCHE PATENTSCHRIFT

(11) **EP 0 797 640 B1**
(45) Veröffentlichungstag und Bekanntmachung des Hinweises auf die Patenterteilung: **11.11.1998**
(21) Anmeldenummer: 95921754.8
(22) Anmeldetag: 25.05.1995
(51) Int. Cl.: C09D 151/08, C08F 283/01

(54) **WÄSSRIGE ÜBERZUGSMITTEL**
AQUEOUS COATING AGENTS
AGENTS DE REVETEMENT AQUEUX

(30) Priorität: 01.06.1994 DE 4419216
(43) Veröffentlichungstag der Anmeldung: 01.10.1997
(73) Patentinhaber: Bollig & Kemper GmbH & Co. KG, 50827 Köln (DE)
(72) Erfinder: HILLE, Hans-Dieter, D-51467 Bergisch Gladbach (DE); MÜLLER, Horst, D-51069 Köln (DE)
(74) Vertreter: Schmitz, Andreas
(86) Internationale Anmeldenummer: EP9501982
(87) Internationale Veröffentlichungsnummer: WO9533011

(56) Entgegenhaltungen:
- DE-A- 4 209 035
- CHEMICAL ABSTRACTS, vol. 74, no. 14, 5.April 1971 Columbus, Ohio, US; abstract no. 65755x, Seite 100; Spalte left; & JP,A,07 022 011 (DAINIPPON INK) 27.Juli 1970

## Beschreibung

Die Erfindung betrifft wäßrige, lösungsmittelfreie Überzugsmittel auf Polyester- und Polyacrylat-Basis sowie deren Verwendung.

Die Reduzierung des Anteils an organischen Lösemitteln in Lacken wird allgemein angestrebt. Auf dem Gebiet der Lackiertechnik, insbesondere bei der Automobillackierung, aber auch in anderen Bereichen, besteht daher ein großes Interesse an wäßrigen Lacksystemen.

Bei der Serienlackierung von Automobilkarossen werden Mehrschichtlackierungen nach dem sogenannten "Basislack/Klarlack"-Verfahren bevorzugt. Dabei wird ein pigmentierter Basislack vorlackiert und nach kurzer Ablüftzeit, ohne Einbrennschritt mit Klarlack überlackiert. Anschließend werden Basislack und Klarlack zusammen eingebrannt. Dieses Verfahren führt zu optisch und technologisch sehr hochwertigen Lackierungen.

Bei Grundierungen und Basislacken gehören wäßrige Systeme seit langem zum Stand der Technik und sie werden in der Automobilindustrie bereits teilweise serienmäßig eingesetzt. Es ist daher allgemein wünschenswert, auch für die oberste Schicht, den Klarlack, ein wäßriges System zu verwenden.

Dazu muß ein solcher wäßriger Klarlack in seinem Eigenschaftenprofil den konventionellen, in organischen Lösemitteln gelösten Klarlacken mindestens ebenbürtig sein. Der Festkörpergehalt bei Spritzviskosität muß so hoch sein, daß mit ein bis zwei Spritzgängen ausreichend hohe Schichtdicken erreicht werden. Dabei müssen die Lackfilme nach dem Einbrennen einen guten Verlauf und einen hohen Glanz haben. Der Film sollte außerdem klar und "füllig" sein, mit einem guten "Stand".

Wichtig ist auch die Reparaturfähigkeit. Auf einer bereits fertig eingebrannten Erstlackierung muß mit möglichst allen üblichen Basislacken ohne Schleifen eine Reparaturlackierung möglich sein, die gut haftet und gut steinschlagbeständig ist. Außerdem muß eine gute Beständigkeit gegenüber chemischen Angriffen gegeben sein, wie z.B. Kraftstoffen, Säuren, insbesondere Schwefelsäure (Batteriesäure) oder Laugen. Sehr wichtig ist des weiteren die Schwitzwasserbeständigkeit.

Unter ökologischen Gesichtspunkten betrachtet ist es wünschenswert, Lacksysteme zur Verfügung zu stellen, die keine organischen Lösemittel enthalten, um zu erreichen, daß bei der Verarbeitung und beim Einbrennen praktisch keine umweltbelastenden Emissionen mehr auftreten.

Die DE-A-31 28 062 beschreibt Emulsionspolymerisate, die gemäß den dort angegebenen Anwendungsbeispielen 3 und 4, in Kombination mit konventionellen Metallic-Basislacken zur Herstellung von wetterbeständigen Zweischichtlackierungen geeignet sein sollen. Die Reparaturfähigkeit und die Schwitzwasserbeständigkeit über 240 h bei 40 °C Konstantklima (DIN 50017) sind jedoch in Kombination mit wäßrigen Basislacken nicht gegeben.

In der EP-A-0 391 271 werden wäßrige Überzugsmittel beschrieben, die als Hauptkomponente ein Polyesteroligomer-Polyacrylat enthalten, das durch radikalische Polymerisation von ethylenisch ungesättigten Monomeren in einem hydroxyfunktionellen, radikalisch nicht polymerisierbaren Polyesteroligomeren hergestellt wird.

Die DE-A-40 27 594 beschreibt wäßrige Klarlacke, die als Bindemittel Emulsionspolymerisate enthalten, die unter Mitverwendung von speziellen fluorierten, ethylenisch ungesättigten Monomeren hergestellt werden.

Alle diese Anmeldungen offenbaren Lacke, die relativ große Mengen an organischen Lösemitteln enthalten.

Eine Aufgabe der vorliegenden Erfindung war es daher, wäßrige, lösemittelfreie Überzugsmittel zur Verfügung zu stellen, die die Anforderungen einer Deckbeschichtung für Automobilkarossen erfüllen und außerdem nahezu emissionsfrei sind.

Diese Aufgabe wird erfindungsgemäß gelöst durch ein wäßriges Überzugsmittel umfassend
- eine wäßrige Polymerdispersion auf Polyester- und Acrylatbasis mit einem Festkörpergehalt von 35 bis 50 Gew.-%, erhältlich durch radikalische Polymerisation von 80 bis 20 Gew.-% mindestens
   (a) eines (Meth-)Acrylsäureesters von Mono- oder Polyalkoholen, wobei die Ester auch noch freie Hydroxylgruppen enthalten können und
   (b) einer ethylenisch ungesättigten, mindestens monofunktionellen Säure und gegebenenfalls
   (c) eines ethylenisch ungesättigten, von (a) und (b) verschiedenen Monomeren oder Gemischen davon,
   mit 20 bis 80 Gew.-% eines radikalisch polymerisierbaren Polyesterharzes mit 0,2 bis 1,5 polymerisierbaren Doppelbindungen pro Molekül und einem Molekulargewicht von 300 bis 8000, erhältlich durch Polykondensation von mindestens zweiwertigen Polyalkoholen mit mindestens zweiwertigen Polycarbonsäuren oder ihren Derivaten in Gegenwart von Polyalkoholen, die mindestens eine polymerisierbare Doppelbindung enthalten, wobei die Mengen (a), (b), (c) und des Polyesterharzes so eingesetzt werden, daß das erhaltene Polymer eine Hydroxylzahl (OH-Zahl) von 30 bis 200 und eine Säurezahl von 5 bis 100 aufweist,
- ein Aminoharz oder ein Polyisocyanat als Vernetzer, wobei das Gewichtsverhältnis von Polymerdispersionsfeststoffanteil zu Vernetzer zwischen 60:40 und 85:15 beträgt,
- wenigstens einem wasserlöslichen und/oder wasseremulgierbaren niedermolekularen Polyalkohol mit einem Siedepunkt von wenigstens 200 °C in einer Menge von 0,5 bis 15 Gew.-%, bezogen auf den Polymerdispersionsfeststoffanteil sowie gegebenenfalls
- übliche Lackzusatzstoffe.

Polyalkohole, die im Rahmen der Erfindung in Frage kommen sind nicht flüchtig und ausgewählt aus Glycerin, Trimethylolpropan, 1,4-Butandiol, 1,2,4-Butantriol, 1,5-Pentandiol, 1,6-Hexandiol, 1,2,6-Hexantriol, Dimethylolcyclohexan, ethoxyliertem und/oder propoxyliertem Pentaerythrit, ethoxyliertem und/oder propoxyliertem Trimethylolpropan, Hydroxypivalinsäureneopentylglykolester (HPN) oder deren Gemische.

Die Einsatzmenge der Polyole kann zwischen 0,5 und 15%, vorzugsweise 2 bis 10% betragen, bezogen auf den Bindemittelfestkörper.

Diese nicht flüchtigen Polyalkohole reagieren beim Einbrennvorgang mit dem Vernetzer und werden somit in das Netzwerk mit eingebaut. Überraschenderweise wird durch den Einsatz dieser Polyole der Verlauf und die Filmbildung des Überzugsmittels während des Einbrennvorganges wesentlich verbessert.

Als (Meth-)Acrylsäureester (a) von Mono- oder Polyalkoholen, wobei die Ester auch noch freie Hydroxylgruppen enthalten können, werden die Ester von Methanol, Ethanol, Propanol, iso-Propanol, Butyl-, tert.-Butyl-, iso-Butyl-, Allyl-, Cyclohexyl-, Ethylhexyl-, Lauryl- oder Stearylalkohol und als Ester von Polyalkoholen die Mono- oder Diester von Ethandiol, 1,2- oder 1,3-Propandiol, 1,4-Butandiol oder 1,6- Hexandiol eingesetzt.

Als ethylenisch ungesättigte, mindestens monofunktionelle Säure (b) können Acrylsäure, Methacrylsäure, Vinylsulfonsäure, Crotonsäure, Maleinsäure, Fumarsäure, Itaconsäure oder die Halbester von Maleinsäure, Fumarsäure oder Itaconsäure eingesetzt werden.

Als ethylenisch ungesättigtes, von (a) und (b) verschiedenes Monomer (c), das gegebenenfalls im Monomerengemisch enthalten sein kann, können Styrol, α-Methylstyrol, Vinyltoluol, Acrylamid, Methacrylamid, Acrylnitril oder Methacrylnitril eingesetzt werden.

Die Herstellung von Polyesterharzen erfolgt nach üblichen, dem Fachmann geläufigen Verfahren durch Veresterung von Dicarbonsäuren oder ihren geeigneten Derivaten, z.B. deren denkbaren Anhydriden, mit Diolen. Die Veresterung erfolgt beispielsweise in Gegenwart von üblichen Veresterungskatalysatoren bei erhöhten Temperaturen von z.B. 180 bis 230 °C in der Schmelze.

Als mindestens zweiwertige Polyalkohole können dabei Ethandiol, Propandiol, Butandiol, Pentandiol, Hexandiol, 2,2-Dimethylpropandiol, Diethylenglykol, Dimethylolcyclohexan, Glycerin, Trimethylolpropan oder Pentaerythrit eingesetzt werden.

Als mindestens zweiwertige Polycarbonsäure können zur Herstellung der Polyester Bernsteinsäure, Glutarsäure, Adipinsäure, Azelainsäure, Sebacinsäure, Phthalsäure, Isophthalsäure, Terephthalsäure, Tetrahydrophthalsäure, Hexahydrophthalsäure, Endomethylentetrahydrophthalsäure, 1,4-Cyclohexandicarbonsäure, Trimellithsäure, Tricarballylsäure, Dimethylolpropionsäure oder deren mögliche Anhydride eingesetzt werden.

Um polymerisierbare Doppelbindungen in die Polyestermoleküle einzuführen, werden polymerisierbare Doppelbindungen enthaltende Polyalkohole mitverwendet.

Beispiele für Polyalkohole, die mindestens eine polymerisierbare Doppelbindung enthalten, sind Glycerinmonoallylether, Trimethylolpropanmonoallylether, Butendiol oder Dimethylolpropionsäuremonoallylether. Es ist auch möglich, einen Carboxylgruppen enthaltenden Polyester herzustellen und dann an diese Carboxylgruppen ein Oxirangruppen tragendes Monomeres anzulagern, wie beispielsweise Allylglycidylether oder Glycidylmethacrylat.

Vorzugsweise enthält das Polyesterharz 0,5 bis 1,0 polymerisierbare Doppelbindungen pro Molekül. Ein Molekulargewicht von 500 bis 3000 für das Polyesterharz ist ebenfalls bevorzugt.

Das Polymere der Polymerdispersion weist vorzugsweise eine Hydroxylzahl von 50 bis 150 auf. Säurezahlen von 15 bis 40 sind für die wäßrige Dispersion bevorzugt.

Die wäßrige Polymerdispersion wird so hergestellt, daß man in einem mit Wasser ganz oder teilweise mischbaren organischen Lösemittel
80 bis 20 Gew.-% eines radikalisch polymerisierbaren Polyesterharzes mit 0,2 bis 1,5 polymerisierbaren Doppelbindungen pro Molekül und einem Molekulargewicht von 300 bis 8000, erhältlich durch Polykondensation von mindestens zweiwertigen Polyalkoholen mit mindestens zweiwertigen Polycarbonsäuren oder ihren Derivaten in Gegenwart von Polyalkoholen, die mindestens eine polymerisierbare Doppelbindung enthalten, vorlegt und diesem Polyesterharz 20 bis 80 Gew.-% mindestens
(a) eines (Meth-)Acrylsäureesters von Mono- oder Polyalkoholen, wobei die Ester auch noch freie Hydroxylgruppen enthalten können und
(b) einer ethylenisch ungesättigten, mindestens monofunktionellen Säure und gegebenenfalls
(c) eines ethylenisch ungesättigten, von (a) und (b) verschiedenen Monomeren oder Gemischen davon,
zugibt und in Gegenwart eines Radikalinitiators polymerisiert, das so erhaltene Produkt mit einer Base neutralisiert, in Wasser dispergiert und das organische Lösemittel, gegebenenfalls unter vermindertem Druck, abdestilliert.

Als organische Lösemittel werden vorzugsweise solche eingesetzt, die ganz oder teilweise wassermischbar und so flüchtig sind, daß sie durch Destillation, gegebenenfalls unter vermindertem Druck entfernt werden können. Diese Lösungsmittel sind ausgewählt aus Ethanol, Propanol, Butanol, Aceton, Methylethylketon, Methylisobutylketon und deren Gemischen.

Zur Einleitung der radikalischen Polymerisation können übliche Radikalinitiatoren eingesetzt werden, die ausgewählt sind aus Di-tert.-butylperoxid, Di-cumylperoxid, Di-benzoylperoxid, Di-lauroylperoxid, Cumolhydroperoxid, tert.-Butylhydroperoxid, tert.-Butylperbenzoat, tert.-Butylperpivalat, tert.-Butyl-per-3,5,5-trimethylhexanoat, tert.-Butyl-per-2-ethylhexanoat, Di-2-ethylhexyl-peroxydicarbonat, Dicyclohexyl-peroxydicarbonat, 1,1-bis-(tert.-butylperoxy)-3,5,5-trimethylcyclohexan, 1,1-bis-(tert.-butylperoxy)cyclohexan, Cyclohexanonperoxid, Methylisobutylketonperoxid, 2,2'-Azo-bis-(2,4-dimethylvaleronitril), 2,2'-Azo-bis-(2-methylbutyronitril), 1,1'-Azo-bis-cyclohexancarbonitril oder Azo-bis-isobutyronitril.

Die radikalische Polymerisation selbst wird bei Temperaturen zwischen 80 und 160 °C durchgeführt.

Die Menge an Hydroxylgruppen tragenden Monomeren (a), (b) und gegebenenfalls (c) sollte so gewählt werden, daß das Gesamtsystem der wäßrigen Dispersion eine Hydroxylzahl bezogen auf Feststoff von 30 bis 200, vorzugsweise 50 bis 150 und besonders bevorzugt von 80 bis 120 aufweist.

Für die Stabilität der wäßrigen Polymerdispersion ist es wichtig, daß die hergestellten Polymere eine ausreichende Menge an zur Anionenbildung befähigten Gruppen enthalten, vorzugsweise Carboxylgruppen. Diese können sowohl über die Polyesterkomponente als auch über die (Meth-)Acrylsäurekomponente (a) eingebracht werden, sie können aber auch über beide Stufen eingeführt werden. Bevorzugt ist jedoch die Einführung über die (Meth-)Acrylsäureester-Komponente (a). Die Säurezahl der erfindungsgemäß hergestellten Polymere kann zwischen 5 und 100, vorzugsweise zwischen 15 und 40 betragen.

Bei der Verwendung von mehrfach ungesättigten Monomeren (a), (b) oder gegebenenfalls (c) besteht die Gefahr der Gelierung. Es ist deshalb notwendig, die Reaktionsbedingungen auf die Art und Menge solcher Monomeren abzustimmen. Gegebenenfalls kann es sinnvoll sein, sogenannte Regler mitzuverwenden. Derartige Regler sind in der EP-A-0 158 161 beschrieben. Dabei handelt es sich um Verbindungen wie z.B. Dodecylmercaptan oder Mercaptoethanol.

Nach der Polymerisation erfolgt die Überführung in die wäßrige Dispersion. Dazu müssen die zur Anionenbildung befähigten Gruppen vorher zumindest teilweise neutralisiert werden. Die Neutralisation erfolgt hierbei auf einen pH-Wert von 7 bis 10, vorzugsweise von 7,3 bis 8,5.

Zur Neutralisation können Basen wie Ammoniak oder flüchtige primäre, sekundäre und/oder tertiäre organische Amine, insbesondere Ethylamin, Dimethylamin, Triethylamin, Morpholin, Piperidin, Diethanolamin, Triethanolamin, Dimethylethanolamin oder Gemische davon eingesetzt werden. Besonders bevorzugt ist jedoch Dimethylethanolamin. Es ist vorteilhaft, das Neutralisationsmittel als verdünnte wäßrige Lösung zuzugeben. Nach der Dispergierung in Wasser wird das organische Lösemittel gebenenfalls unter vermindertem Druck, abdestilliert.

Der Festkörpergehalt der Dispersionen liegt dabei zwischen 35 und 50 Gew.-%, vorzugsweise zwischen 35 und 45 Gew.-%. Die so erhaltenen Polymerdispersionen werden zur Herstellung der erfindungsgemäßen wäßrigen Überzugsmittel, insbesondere wäßrigen Klarlacken für serienmäßige Zweischicht-Lackierungen, insbesondere für Automobilkarosserien, verwendet. Hierzu müssen die wässrigen Polymerdispersionen mit Vernetzern, dem Polyalkohol und gegebenenfalls den üblichen Zusatzstoffen gemischt werden.

Als Vernetzer ist jeder für Lackzwecke übliche Aminoharz-Vernetzer geeignet, sofern er praktisch lösemittelfrei ist und die Wasserverdünnbarkeit des Lackes nicht beeinträchtigt. Vorzugsweise beträgt das Gewichtsverhältnis von Polymerdisperionsfeststoffanteil zu Vernetzer zwischen 65:35 und 75:25, besonders bevorzugt 70:30. Vorzugsweise werden Melamin-Formaldehyd-Harze eingesetzt.

Die wäßrigen Klarlacke können anstelle der Aminoharze, oder zusätzlich dazu auch mit Polyisocyanaten als Vernetzer versetzt werden und als Zweikomponenten-Klarlacke verarbeitet und bei Raumtemperatur ausgehärtet werden. Hierzu sind beispielsweise die sogenannten "Lackpolyisocyanate" geeignet auf Basis von Hexamethylendiisocyanat oder von 1-Isocyanato-3,5,5-trimethylcyclohexylisocyanat (Isophorondiisocyanat) und/oder 4,4'-Dicyclohexylmethandiisocyanat. Unter "Lackpolyisocyanate" sind die an sich bekannten Biuret-, Urethan-, Uretdion- und/oder Isocyanuratgruppen aufweisenden Derivate der genannten Diisocyanate zu verstehen. Geeignet sind auch hydrophile Polyisocyanate, wie sie in EP-A-0 061 628, EP-A-0 206 059 und EP-A-0 469 389 beschrieben sind.

Es können auch verkappte (blockierte) Polyisocyanate als Vernetzer eingesetzt werden. Bevorzugt sind solche verkappten Polyisocyanate, die bei Temperaturen von unter 150 °C rückspalten. Geeignet sind die verkappten Polyisocyanate, wie sie in DE-A-27 12 931, DE-A-27 32 662, DE-A-27 32 775, DE-A-27 44 782, DE-A-27 08 611 beschrieben sind. Beispiel ist ein Butanonoxim verkapptes, trimerisiertes Isophorondiisocyanat, wie es von der Firma Hüls AG unter der Bezeichnung "Vestanat® T1890" vertrieben wird.

Die erfindungsgemäßen wäßrigen Überzugsmittel können außer den erfindungsgemäßen Polymerdispersionen noch weitere wasserverträgliche Bindemittel enthalten, die ausgewählt sind aus Polyestern, Polyethern, Polyurethanen und Polyacrylaten. Die Zusatzmenge kann 0 bis 20 Gew.-% betragen, bezogen auf Festkörper.

Die erfindungsgemäßen Klarlacke können übliche Zusatzstoffe enthalten, wie Verlaufsmittel, Netzmittel, Lichtschutzmittel oder Rheologiehilfsmittel.

Die erfindungsgemäßen Überzugsmittel, insbesondere die Klarlacke können durch übliche Applikationstechniken aufgebracht werden. Die bevorzugte Auftragstechnik ist Spritzen, vorzugsweise elektrostatisch mit Hochrotationsglocken. Die Klarlacke können aber auch durch Streichen, Rakeln oder Tauchen aufgebracht werden.

Die erfindungsgemäßen wäßrigen Klarlacke sind insbesondere geeignet für die Verwendung als Decklack bei Mehrschicht-lackierungen in der Automobilindustrie. Sie zeichnen sich gegenüber den konventionellen, organische Lösungsmittel enthaltenden Systemen besonders durch einen vernachlässigbaren Gehalt an organischen Lösemitteln bei gleichzeitig hohem Festkörpergehalt und niedriger Viskosität aus. Bedingt durch den vernachlässigbaren Gehalt an organischen Lösemitteln zeichnen sich die wäßrigen Klarlacke ferner durch eine besondere Umweltfreundlichkeit aus.

Die wäßrigen Klarlacke können "naß-in-naß" auf einen wäßrigen oder nicht wäßrigen Basislack aufgebracht werden. Die naß-in-naß-Applikation schließt eine Antrocknung des Basislacks vor der Applikation des Klarlacks nicht aus; gemeinsam wird die Härtung bzw. der Einbrennvorgang (z.B. bei 130 bis 160 °C für 15 bis 30 min) durchgeführt.

Die Lackfilme, die aus den erfindungsgemäßen wäßrigen Klarlacksystemen hergestellt werden, zeichnen sich durch ein gleich hohes Eigenschaftsniveau wie die bekannten lösemittelhaltigen Systeme aus. Eigenschaften, wie z.B. Oberflächenhärte, Klarheit, Glanz, Fülle, Verlauf, Kratzfestigkeit, Elastizität, Beständigkeit gegen Lösemittel, gegen Pflegemittel, gegen bestimmte Chemikalien, wie z.B. Schwefelsäure, Natronlauge, Bremsflüssigkeit, Diesel- und Ottokraftstoff, Kurz- und Langzeitbewitterungsbeständigkeit sind mindestens so gut, in der Regel jedoch besser, wie bei bekannten lösemittelhaltigen Systemen oder anderen im Stand der Technik bekannten wäßrigen Systemen. Darüberhinaus weisen die wäßrigen Überzugsmittel eine gute Lagerstabilität auf.

Die nachfolgenden Beispiele dienen zur Erläuterung der Erfindung.

### Beispiele:

### Polyester A

In einem 2 1 Reaktionsgefäß mit Rührer und Füllkörperkolonne werden 92 Teile 1,6-Hexandiol, 73 Teile Trimethylolpropanmonoallylether, 250 Teile Neopentylglykol, 80 Teile Trimethylolpropan, 554 Teile Cyclohexan-1,2-dicarbonsäureanhydrid und 2 Teile Dibutylzinnoxid aufgeschmolzen und unter Rühren so erhitzt, daß die Kolonnenkopftemperatur 100°C nicht überschreitet.
Die Temperatur des Reaktionsgemisches sollte dabei nicht mehr als 230°C erreichen. Es wird so lange verestert, bis eine Säurezahl von <4 erreicht ist. Nach Abkühlen auf <80°C wird mit 328 Teilen Methylethylketon auf einen Festkörpergehalt von 75 % verdünnt.
Man erhält einen Polyester mit einem berechneten mittleren Molekulargewicht von 1680 und einer Hydroxylzahl von 100 (bezogen auf Festharz).

### Beispiel 1

In einem 4 1 Reaktionsgefäß mit Rührer, Thermometer, Rückflußkühler und 2 Zulaufgefäßen werden 532 Teile des Polyesterharzes A zusammen mit 76 Teilen Methylethylketon eingewogen.
In dem einen der beiden Zulaufgefäße wird eine Monomerenmischung, bestehend aus 103 Teilen Butylmethacrylat, 20 Teilen Mono-Styrol, 48 Teilen 2-Hydroxypropylacrylat, 53 Teilen 2-Hydroxypropylmethacrylat und 17 Teilen Acrylsäure eingewogen. In dem anderen Zulaufgefäß wird die Initiatorlösung bereitet, bestehend aus 10 Teilen 2,2'-Azo-bis-isobutyronitril (AIBN) und 69 Teilen Methylethylketon. Nachdem der Reaktionsgefäßinhalt auf 80°C aufgeheizt wurde, wird die Monomerenmischung innerhalb von 3 Stunden, die Polymerisationsinitiatorlösung innerhalb 3,5 Stunden simultan zugegeben. Die Polymerisationstemperatur wird bei 80°C gehalten. Nach Beendigung der Zuläufe wird noch 1,5 Stunden bei 80°C gerührt. Danach werden 13 Teile Dimethylethanolamin (entspricht einem Neutralisationsgrad von 60 %) und 1000 Teile vollentsalztes Wasser zugegeben.
Bei max. 55°C wird das Methylethylketon unter vermindertem Druck abdestilliert.
Man erhält eine Dispersion mit einem Festkörpergehalt von 43 % und einem pH-Wert von 7,70.
Das Polymere hat eine Säurezahl von 18 und eine Hydroxylzahl von 111.

### Anwendungsbeispiele 1-5

620 Teile der Dispersion von Beispiel 1 werden unter einem Schnellrührer mit 143 Teilen einer 80%igen wäßrigen Lösung eines handelsüblichen wasserverdünnbaren Melamin-Formaldehyd-Harzes (Luwipal® LR8839) gut gemischt. Danach wird der pH-Wert auf 8,60-8,70 mit Dimethylethanolamin eingestellt. Anschließend werden 0,09 Teile eines handelsüblichen Verlaufsmittels (Fluorad® FC430) und 4,6 Teile eines handelsüblichen Silikonharz-haltigen Additivs (Additol® XW329) nacheinander zugegeben und gemischt.

Zu dieser Mischung werden die in Tabelle 1 aufgeführten Polyole zugegeben und jeweils mit vollentsalztem Wasser auf eine Spritzviskosität von 18 Sekunden (gemessen im DIN 4 mm Becher bei 20 °C) eingestellt.

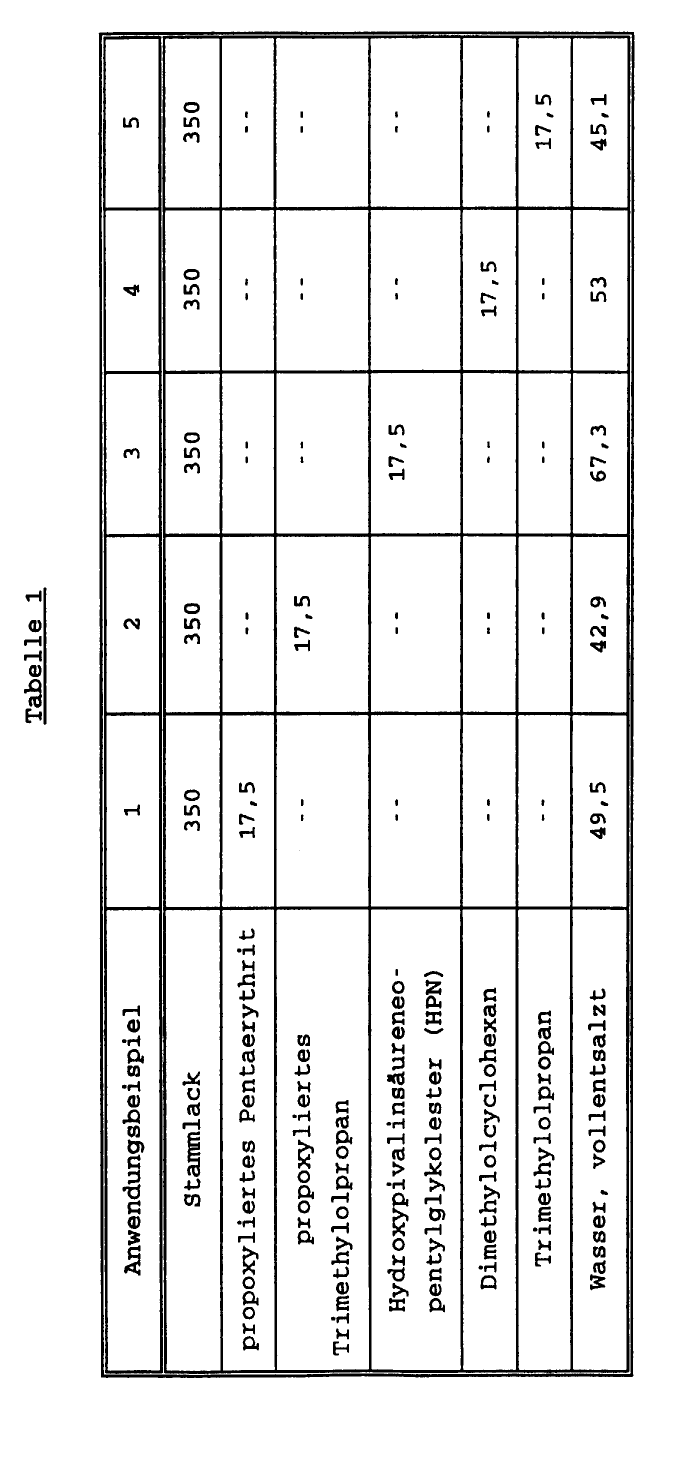

Die erhaltenen Klarlacke der Beispiele 1-5 wurden auf einen wasserverdünnbaren Metallic-Basislack, der vorher 10 Minuten bei 100 °C angetrocknet wurde, in einer Schichtdicke von 35-40 µm aufgespritzt, 10 Minuten bei 80 °C vorgetrocknet und bei 20 Minuten 150 °C eingebrannt. Die erhaltenen Überzüge wurden getestet (siehe Tabelle 2):

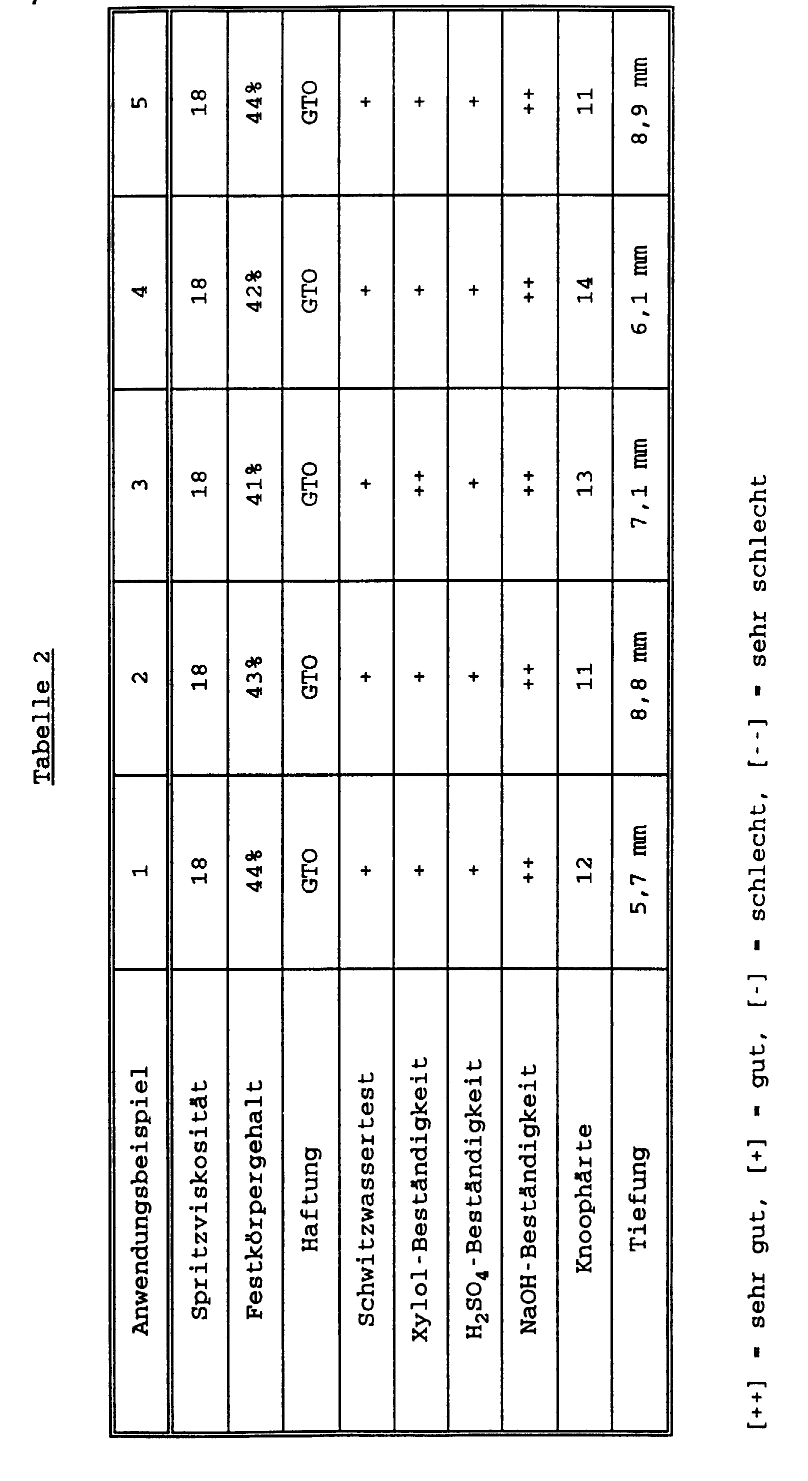

## Patentansprüche

1. Wäßriges Überzugsmittel umfassend
- eine wäßrige Polymerdispersion auf Polyester- und Acrylatbasis mit einem Festkörpergehalt von 35 bis 50 Gew.-%, erhältlich durch radikalische Polymerisation von 80 bis 20 Gew.-% mindestens
(a) eines (Meth-)Acrylsäureesters von Mono- oder Polyalkoholen, wobei die Ester auch noch freie Hydroxylgruppen enthalten können und
(b) einer ethylenisch ungesättigten, mindestens monofunktionellen Säure und gegebenenfalls
(c) eines ethylenisch ungesättigten, von (a) und (b) verschiedenen Monomeren oder Gemischen davon,
mit 20 bis 80 Gew.-% eines radikalisch polymerisierbaren Polyesterharzes mit 0,2 bis 1,5 polymerisierbaren Doppelbindungen pro Molekül und einem Molekulargewicht von 300 bis 8000, erhältlich durch Polykondensation von mindestens zweiwertigen Polyalkoholen mit mindestens zweiwertigen Polycarbonsäuren oder ihren Derivaten in Gegenwart von Polyalkoholen, die mindestens eine polymerisierbare Doppelbindung enthalten, wobei die Mengen (a), (b), (c) und des Polyesterharzes so eingesetzt werden, daß das erhaltene Polymer eine Hydroxylzahl (OH-Zahl) von 30 bis 200 und eine Säurezahl von 5 bis 100 aufweist,
- ein Aminoharz oder ein Polyisocyanat als Vernetzer, wobei das Gewichtsverhältnis von Polymerdispersionsfeststoffanteil zu Vernetzer zwischen 60:40 und 85:15 beträgt,
- wenigstens einem wasserlöslichen und/oder wasseremulgierbaren Polyalkohol mit einem Siedepunkt von wenigstens 200 °C in einer Menge von 0,5 bis 15 Gew.-%, bezogen auf den Polymerdispersionsfeststoffanteil sowie gegebenenfalls
- übliche Lackzusatzstoffe.

2. Überzugsmittel nach Anspruch 1, dadurch gekennzeichnet, daß der Polyalkohol ausgewählt ist aus Glycerin, Trimethylolpropan, 1,4-Butandiol, 1,2,4-Butantriol, 1,5-Pentandiol, 1,6-Hexandiol, 1,2,6-Hexantriol, Dimethylolcyclohexan, ethoxyliertem und/oder propoxyliertem Pentaerythrit, ethoxyliertem und/oder propoxyliertem Trimethylolpropan, Hydroxypivalinsäureneopentylglykolester oder deren Gemische.

3. Überzugsmittel nach Anspruch 1 oder 2, dadurch gekennzeichnet, daß als Aminoharz wasserlösliche und/oder wasserdispergierbare Aminoharze, insbesondere durch Umsetzung von Aldehyden mit mehreren Amino- oder Iminogruppen tragenden Verbindungen hergestellte Aminoharze eingesetzt werden.

4. Überzugsmittel nach einem oder mehreren der Ansprüche 1 bis 3, dadurch gekennzeichnet, daß als Aminoharz Melamin-Formaldehyd-Harze eingesetzt werden.

5. Überzugsmittel nach einem oder mehreren der Ansprüche 1 bis 4, dadurch gekennzeichnet, daß anstelle des Aminoharzes oder zusätzlich zu dem Aminoharz als Vernetzer ein Polyisocyanat eingesetzt wird.

6. Überzugsmittel nach einem oder mehreren der Ansprüche 1 bis 5, dadurch gekennzeichnet, daß es in Form eines Klarlacks vorliegt.

7. Überzugsmittel nach einem oder mehreren der Ansprüche 1 bis 6, dadurch gekennzeichnet, daß als (Meth-)Acrylsäureester von Monoalkoholen die Ester von Methanol, Ethanol, Propanol, iso-Propanol, Butyl-, tert.-Butyl-, iso-Butyl-, Allyl-, Cyclohexyl-, Ethylhexyl-, Lauryl- oder Stearyl-alkohol und als Ester von Polyalkoholen die Mono- oder Diester von Ethandiol, 1,2- oder 1,3-Propandiol, 1,4-Butandiol oder 1,6-Hexandiol eingesetzt werden.

8. Überzugsmittel nach einem oder mehreren der Ansprüche 1 bis 7, dadurch gekennzeichnet, daß als ethylenisch ungesättigte, mindestens monofunktionelle Säure Acrylsäure, Methacrylsäure, Vinylsulfonsäure, Crotonsäure, Maleinsäure, Fumarsäure, Itaconsäure oder die Halbester von Maleinsäure, Fumarsäure oder Itaconsäure eingesetzt werden.

9. Überzugsmittel nach einem oder mehreren der Ansprüche 1 bis 8, dadurch gekennzeichnet, daß als ethylenisch ungesättigtes, von (a) und (b) verschiedenes Monomer Styrol, α-Methylstyrol, Vinyltoluol, Acrylamid, Methacrylamid, Acrylnitril oder Methacrylnitril eingesetzt wird.

10. Überzugsmittel nach einem oder mehreren der Ansprüche 1 bis 9, dadurch gekennzeichnet, daß als mindestens zweiwertiger Polyalkohol Ethylenglykol, 1,3- und 1,2-Propylenglykol, 1,4-Butandiol, 1,5-Pentandiol, 1,6-Hexandiol, 2,2-Dimethylpropandiol, Diethylenglykol, Triethylenglykol, Tetraethylenglykol, Hexaethylenglykol, 1,3-Dimethylolcyclohexan oder 1,4-Dimethylolcyclohexan, Glycerin, Trimethylolpropan oder Pentaerythrit eingesetzt werden.

11. Überzugsmittel nach einem oder mehreren der Ansprüche 1 bis 10, dadurch gekennzeichnet, daß als mindestens zweiwertige Polycarbonsäure Bernsteinsäure, Glutarsäure, Adipinsäure, Acelainsäure, Sebacinsäure, Phthalsäure, Isophthalsäure, Terephthalsäure, Tetrahydrophthalsäure, Hexahydrophthalsäure, Endomethylentetrahydrophthalsäure, 1,2-, 1,3- oder 1,4-Cyclohexandicarbonsäure, Muconsäure und Kamphersäure, Trimellithsäure, Tricarballylsäure, Dimethylolpropionsäure oder deren mögliche Anhydride eingesetzt werden.

12. Überzugsmittel nach einem oder mehreren der Ansprüche 1 bis 11, dadurch gekennzeichnet, daß als Polyalkohol, der mindestens eine polymerisierbare Doppelbindung enthält, Glycerinmonoallylether, Trimethylolpropanmonoallylether, 1,4-Butendiol oder Dimethylolpropionsäuremonoallylether eingesetzt wird.

13. Überzugsmittel nach einem oder mehreren der Ansprüche 1 bis 12, dadurch gekennzeichnet, daß das Polyesterharz 0,5 bis 1,0 polymerisierbare Doppelbindungen enthält.

14. Überzugsmittel nach einem oder mehreren der Ansprüche 1 bis 13, dadurch gekennzeichnet, daß sie eine Hydroxylzahl von 50 bis 150 und vorzugsweise von 80 bis 120 aufweist.

15. Überzugsmittel nach einem oder mehreren der Ansprüche 1 bis 14, dadurch gekennzeichnet, daß sie eine Säurezahl von 15 bis 40 aufweist.

16. Überzugsmittel nach einem oder mehreren der Ansprüche 1 bis 15, dadurch gekennzeichnet, daß es zusätzlich ein weiteres Bindemittel enthält, das ausgewählt ist aus Polyestern, Polyurethanen und Polyacrylaten.

17. Verwendung der wäßrigen Überzugsmittel nach einem oder mehreren der Ansprüche 1 bis 16 als Klarlack zur Herstellung von Mehrschicht-Lackierungen.

## Claims

1. An aqueous coating composition comprising
- an aqueous, polyester- and acrylate-based polymer dispersion having a solids content of from 35 to 50 % by weight and obtainable by free-radical polymerization of from 80 to 20 % by weight of at least
(a) one (meth)acrylic acid ester of mono- or polyalcohols, wherein said esters may contain free hydroxyl groups, and
(b) one ethylenically unsaturated, at least monofunctional acid, and optionally
(c) one ethylenically unsaturated monomer other than (a) and (b) or mixtures thereof,
with from 20 to 80 % by weight of a polyester resin capable of undergoing a free-radical polymerization, containing of from 0.2 to 1.5 polymerizable double bonds per molecule and having a molecular weight of from 300 to 8,000, said resin being obtainable by a polycondensation of at least dihydric polyalcohols with at least dibasic polycarboxylic acids or derivatives thereof in the presence of polyalcohols containing at least one polymerizable double bond, the amounts employed of (a), (b) and (c) and the polyester resin being such that the resulting polymer has a hydroxyl value (OH value) of from 30 to 200 and an acid value of from 5 to 100,
- one amino resin or a polyisocyanate as crosslinking agent, wherein the weight ratio of the solids content of the polymer dispersion to the crosslinking agent is from 60:40 to 85:15,
- at least one water-soluble and/or water-emulsifiable polyalcohol having a boiling point of at least 200 °C in an amount of from 0.5 to 15 % by weight, based on the solids content of the polymer dispersion, and optionally
- conventional lacquer additives.

2. The coating composition according to claim 1, characterized in that the polyalcohol is selected from glycerol, trimethylolpropane, 1,4-butanediol, 1,2,4-butanetriol, 1,5-pentanediol, 1,6-hexanediol, 1,2,6-hexanetriol, dimethylolcyclohexane, ethoxylated and/or propoxylated pentaerythritol, ethoxylated and/or propoxylated trimethylolpropane, hydroxypivalic acid neopentyl glycol ester, or the mixtures thereof.

3. The coating composition according to claim 1 or 2, characterized in that as the amino resin there are employed water-soluble and/or water-dispersible amino resins, in particular amino resins prepared by reacting aldehydes with several compounds bearing amino or imino groups.

4. The coating composition according to any one or more of claims 1 to 3, characterized in that as the amino resin there are employed melamineformaldehyde resins.

5. The coating composition according to any one or more of claims 1 to 4, characterized in that instead of the amino resin or in addition to the amino resin there is employed a polyisocyanate as crosslinking agent.

6. The coating composition according to any one or more of claims 1 to 5, characterized in that it is present in the form of a clear coat.

7. The coating composition according to any one or more of claims 1 to 6, characterized in that as the (meth)acrylic acid esters of monoalcohols there are employed the esters of methanol, ethanol, propanol, iso-propanol, butyl, tert.-butyl, iso-butyl, allyl, cyclohexyl, ethylhexyl, lauryl or stearyl alcohol and, as the esters of polyalcohols, the mono and diesters of ethanediol, 1,2- or 1,3-propanediol 1,4-butanediol, or 1,6-hexanediol.

8. The coating composition according to any one or more of claims 1 to 7, characterized in that as the ethylenically unsaturated, at least monofunctional acid there can be employed acrylic acid, methacrylic acid, vinylsulfonic acid, crotonic acid, maleic acid, fumaric acid, itaconic acid or the semi-esters of maleic acid, fumaric acid or itaconic acid.

9. The coating composition according to any one or more of claims 1 to 8, characterized in that as the ethylenically unsaturated monomer other than (a) and (b) there can be employed styrene, α-methylstyrene, vinyl toluene, acrylamide, methacrylamide, acrylonitrile or methacrylonitrile.

10. The coating composition according to any one or more of claims 1 to 9, characterized in that as the at least dihydric polyalcohol there can be employed ethyleneglycol, 1,3- and 1,2-propyleneglycol, 1,4-butanediol, 1,5-pentanediol, 1,6-hexanediol, 2,2-dimethylpropanediol, diethyleneglycol, triethyleneglycol, tetraethyleneglycol, hexaethyleneglycol, 1,3-dimethylolcyclohexane or 1,4-dimethylolcyclohexane, glycerol, trimethylolpropane, or pentaerythritol.

11. The coating composition according to any one or more of claims 1 to 10, characterized in that as the at least dibasic polycarboxylic acid there is employed succinic acid, glutaric acid, adipic acid, azelaic acid, sebacic acid, phthalic acid, isophthalic acid, terephthalic acid, tetrahydrophthalic acid, hexahydrophthalic acid, endomethylenetetrahydrophthalic acid, 1,2-, 1,3- or 1,4-cyclohexanedicarboxylic acid, muconic acid and camphoric acid, trimellitic acid, tricarballylic acid, dimethylolpropionic acid or the possible anhydrides thereof.

12. The coating composition according to any one or more of claims 1 to 11, characterized in that as the polyalcohol containing at least one polymerizable double bond there is employed glycerol monoallylether, trimethylolpropane monoallylether, 1,4-butenediol or dimethylolpropionic acid monoallylether.

13. The coating composition according to any one or more of claims 1 to 12, characterized in that the polyester resin contains 0.5 to 1.0 polymerizable double bonds.

14. The coating composition according to any one or more of claims 1 to 13, characterized in that it has a hydroxyl value of from 50 to 150 and preferably of from 80 to 120.

15. The coating composition according to any one or more of claims 1 to 14, characterized in that it has an acid value of from 15 to 40.

16. The coating composition according to any one or more of claims 1 to 15, characterized in that it additionally contains another binder selected from polyesters, polyurethanes, and polyacrylates.

17. Use of the coating compositions according to any one or more of claims 1 to 16 as a clear coat for the preparation of multi-layer coatings.

## Revendications

1. Agent de revêtement aqueux comprenant
- une dispersion aqueuse de polymère à base de polyester et d'acrylate avec une teneur en solides de 35 à 50% en poids, que l'on peut obtenir par une polymérisation radicalaire de 80 à 20% en poids d'au moins
(a) un ester d'acide (méth)acrylique de mono- ou polyalcools, les esters pouvant encore contenir des groupes hydroxyles libres et
(b) un acide éthyléniquement insaturé. au moins monofonctionnel et le cas échéant,
(c) un monomère éthyléniquement insaturé, différant de (a) et de (b), ou de leurs mélanges,
avec 20 à 80% en poids d'une résine polyester polymérisable par voie radicalaire avec de 0,2 à 1,5 doubles liaisons polymérisables par molécule et un poids moléculaire de 300 à 8000, que l'on peut obtenir par polycondensation d'au moins deux polyalcools bivalents avec des acides polycarboxyliques au moins bivalents ou leurs dérivés en présence de polyalcools qui contiennent au moins une double liaison polymérisable, les quantités de (a), (b), (c) et de la résine polyester étant mises en oeuvre de manière que le polymère obtenu présente un indice d'hydroxyle (indice OH) de 30 à 200 et un indice d'acide de 5 à 100.
- une résine aminée ou un polyisocyanate comme agent réticulant, le rapport pondéral de la teneur en solides de la dispersion de polymère à l'agent réticulant étant compris entre 60:40 et 85:15,
- au moins un polyalcool soluble dans l'eau et/ou émulsifiable dans l'eau ayant un point d'ébullition d'au moins 200°C en une quantité de 0.5 à 15% en poids, par rapport à la teneur en solides de la dispersion de polymère, ainsi que le cas échéant
- des additifs habituels pour vernis.

2. Agent de revêtement selon la revendication 1, caractérisé en ce que le polyalcool est choisi parmi la glycérine. le triméthylolpropane, le 1.4-butanediol, le 1,2,4-butanetriol, le 1,5-pentanediol, le 1,6-hexanediol, le 1,2,6-hexanetriol, le diméthylolcyclohexane, le pentaérythritol éthoxylé et/ou propoxylé, le triméthylolpropane éthoxylé et/ou propoxylé, l'ester de néopentylglycol de l'acide hydroxypivalique ou leurs mélanges.

3. Agent de revêtement selon les revendications 1 ou 2, caractérisé en ce qu'on utilise comme résine amino des résines amino solubles dans l'eau et/ou dispersables dans l'eau, en particulier des résines amino préparées par réaction d'aldéhydes avec plusieurs composés portant des groupes amino ou imino.

4. Agent de revêtement selon une ou plusieurs des revendications 1 à 3, caractérisé en ce qu'on utilise comme résine amino des résines mélamine-formaldéhyde.

5. Agent de revêtement selon une ou plusieurs des revendications 1 à 4, caractérisé en ce qu'au lieu de la résine amino ou bien en plus de la résine amino, on utilise comme agent réticulant un polyisocyanate.

6. Agent de revêtement selon une ou plusieurs des revendications 1 à 5, caractérisé en ce qu'il se présente sous la foime d'une laque transparente.

7. Agent de revêtement selon une ou plusieurs des revendications 1 à 6, caractérisé en ce qu'on utilise comme esters d'acides (méth)acryliques et de monoalcools des esters de méthanol, d'éthanol, de propanol. d'isopropanol, d'alcool butylique, tert-butylique, isobutylique. allylique. cyclohexylique, éthylhexylique, laurylique ou stéarylique, et comme esters de polyalcools les mono- ou diesters (l'éthanediol, de 1,2- ou de 1,3-propanediol, de 1,4-butanediol ou de 1,6-hexanediol.

8. Agent de revêtement selon une ou plusieurs des revendications 1 à 7, caractérisé en ce qu'on utilise comme acide éthyléniquement insaturé, au moins monofonctionnel, l'acide acrylique. l'acide méthacrylique, l'acide vinylsulfonique, l'acide crotonique, l'acide maléique. l'acide fumarique. l'acide itaconique ou les hémi-esters de l'acide maléique, de l'acide fumarique ou de l'acide itaconique.

9. Agent de revêtement selon une ou plusieurs des revendications 1 à 8. caractérisé en ce qu'on utilise comme monomère éthyléniquement insaturé, différent de (a) et de (b). le styrène, l'alpha-méthylstyrène. le vinyltoluène l'acrylamide, le méthacrylamide, l'acrylonitrile ou le méthacrylonitrile.

10. Agent de revêtement selon l'une ou plusieurs des revendications 1 à 9 , caractérisé en ce qu'on utilise comme polyalcool au moins bivalent l'éthylène glycol, le 1,3- et le 1,2-propylène glycol, le 1,4-butanediol, le 1,5-pentanediol, le 1,6-hexanediol, le 2,2-diméthylpropanediol, le diéthylène glycol, le triéthylène glycol, le tétraéthylène glycol, l'hexaéthylène glycol, le 1,3-diméthylolcyclohexane ou le 1,4-diméthylolcyclohexane, la glycérine. le triméthylolpropane ou le pentaérythritol.

11. Agent de revêtement selon une ou plusieurs des revendications 1 à 10, caractérisé en ce qu'on utilise comme acide polycarboxylique au moins bivalent l'acide succinique, l'acide glutarique, l'acide adipique, l'acide azélaïque, l'acide sébacique, l'acide phtalique, l'acide isophtalique. l'acide téréphtalique, l'acide tétrahydrophtalique, l'acide hexahydrophtalique. l'acide endométhylène-tétrahydrophtalique. l'acide 1,2-, 1,3- ou 1,4-cyclohexanedicarboxylique, l'acide muconique et l'acide camphorique. l'acide trimellitique, l'acide tricarballylique, l'acide diméthylolpropionique ou leurs anhydrides possibles.

12. Agent de revêtement selon une ou plusieurs des revendications 1 à 11, caractérisé en ce qu'on utilise comme polyalcool qui contient au moins une double liaison polymérisable l'éther monoallylique de glycérine, l'éther monoallylique de triméthylolpropane, le 1,4-butènediol ou l'éther monoallylique de l'acide diméthylolpropionique.

13. Agent de revêtement selon une ou plusieurs des revendications 1 à 12, caractérisé en ce que la résine polyester contient de 0,5 à 1,0 double liaison polymérisable.

14. Agent de revêtement selon une ou plusieurs des revendications I à 13, caractérisé en ce qu'il présente un indice d'hydroxyle de 50 à 150 et de préférence de 80 à 120.

15. Agent de revêtement selon une ou plusieurs des revendications 1 à 14, caractérisé en ce qu'il présente un indice d'acide de 15 à 40.

16. Agent de revêtement selon une ou plusieurs des revendications 1 à 15, caractérisé en ce qu'il contient en outre un autre liant qui est choisi parmi les polyesters, les polyuréthanes et les polyacrylates.

17. Utilisation de l'agent de revêtement aqueux selon une ou plusieurs des revendications 1 à 16 comme laque transparente pour la préparation de vernis à plusieurs couches.
